# EUROPÄISCHE PATENTSCHRIFT

(11) **EP 1 431 697 B1**
(45) Veröffentlichungstag und Bekanntmachung des Hinweises auf die Patenterteilung: **13.02.2008**
(21) Anmeldenummer: 03016561.7
(22) Anmeldetag: 24.07.2003
(51) Int. Cl.: F28F 13/00, F28F 13/14, F28F 19/02, F24H 8/00, F24H 1/44

(54) **Wärmetauschereinheit**
Heat exchange unit
Unité d'échange de chaleur

(30) Priorität: 20.12.2002 DE 10259951
(43) Veröffentlichungstag der Anmeldung: 23.06.2004
(73) Patentinhaber: ROBERT BOSCH GMBH, 70442 Stuttgart (DE)
(72) Erfinder: Hosch, Manfred, 73669 Lichtenwald (DE)

(56) Entgegenhaltungen:
- EP-A2- 0 163 764
- EP-A2- 0 387 859
- EP-A2- 0 745 805
- EP-A2- 1 026 454
- EP-A2- 1 136 764
- EP-A2- 1 251 319
- US-A- 4 169 431

## Beschreibung

Die Erfindung betrifft eine Wärmetauschereinheit aus einem der Brennkammer mit Brennereinheit zugekehrten Heißgas-Wärmetauscherabschnitt und einem dem Abgasauslass zugekehrten (von einer zu erwärmenden Flüssigkeit durchflossen) Kondensations-Wärmetauscherabschnitt.

### Stand der Technik

Diese bekannte Wärmetauschereinheit aus zwei unterschiedlichen Abschnitten wird insbesondere dazu verwendet, die Kondensation in den dem Abgasauslass zugekehrten Abschnitt zu verlagern. Dies bringt den Vorteil mit sich, dass nur in diesem Abschnitt besondere Korrosions-Schutzmaßnahmen getroffen werden müssen.

Solche Wärmetauschereinheiten sind z. B aus den Dokumenten EP-A-1251319 und EP-A-0163764 bekannt. Diese zeigen jeweils eine Wärmetauschereinheit mit einem Heißgas-Wärmetauscherabschnitt und einem Kondensations-Wärmetauscherabschnitt, in denen Maßnahmen ergriffen werden, um Kondensation nur in dem Kondensations-Wärmetauscherabschnitt zu erreichen.

Dazu zeigt das Dokument EP-A-0745805 eine Wärmetauschereinheit mit zwei Wärmetauscherabschnitten (9,11) und einer Übergangszone (18). Diese Übergangszone (18) wird durch Strahlungswärme aus dem oberen Bereich der Zone 6 des Feuerraumes 3 soweit erwärmt, dass die Ansammlung von Kondensat behindert wird.

Ferner zeigt das Dokument EP-A-0387859 eine Wärmetauschereinheit mit zwei Wärmetauscherabschnitten. Die zweisstufige Ausgestaltung der Wasserkammer ist als einteiliges Gußstück ausgebildet. Das Gußstück bildet durch Aufnahme von Silikat eine sehr korrosionsbeständige Gußhaut, so dass beide Wärmetauscherabschnitte korrosionsbeständig sind.

Es hat sich nun gezeigt, dass bei niedrigen Temperaturen der zu erwärmenden Flüssigkeit auch die dem Abgas zugekehrten Innenwände des Heißgas-Wärmetauschers auf eine Temperatur abfallen können, die unter dem Taupunkt liegt, so dass zumindest in dem Teilbereich des Heißgas-Wärmetauscherabschnittes der dem Kondensations-Wärmetauscherabschnitt zugekehrt ist, eine unerwünschte Kondensatbildung stattfindet.

Es ist Aufgabe der Erfindung, bei einer Wärmetauschereinheit der eingangs erwähnten Art, die ja insbesondere in Gasheizgeräten eingesetzt wird, diese unerwünschte Kondensatbildung im Heißgas-Wärmetauscherabschnitt sicher zu vermeiden, ohne aufwändige und teuere Korrosionsschutzmaßnahmen anwenden zu müssen.

### Vorteile der Erfindung

Diese Aufgabe wird nach der Erfindung dadurch gelöst, dass die dem Abgasstrom ausgesetzten Innenwände des Heißgas-Wärmetauscherabschnittes zumindest in einem dem Kondensations-Wärmetauscherabschnitt zugekehrten Bereich eine Außenbeschichtung mit definiertem Wärmeleitwert tragen, die die Innenwände des Heißgas-Wärmetauscherabschnittes auf einer Temperatur über dem Taupunkt hält.

Diese Beschichtung mit dem definierten Wärmeleitwert verhindert eine Abkühlung der dem Abgas zugekehrten Innenwände des Heißgas-Wärmetauscherabschnittes unter den Taupunkt der Abgase durch einen schlechten Wärmedurchgang, so dass selbst bei niedrigen Temperaturen der Flüssigkeit im Heißgas-Wärmetauscherabschnitt eine Kondensation verhindert ist. Die vollständige Kondensation findet dann im Kondensations-Wärmetauscherabschnitt statt, der dafür korrosionsgeschützt ausgebildet ist. Diese Maßnahme ist bei allen Wärmetauschereinheiten anwendbar, die einen Heißgas-Wärmetauscherabschnitt und einen Kondensations-Wärmetauscherabschnitt aufweisen.

Dabei kann aus Konstruktionsgründen einfach vorgesehen sein, dass der Heißgas-Wärmetauscherabschnitt und der Kondensations-Wärmetauscherabschnitt als getrennte Wärmetauscher ausgebildet sind.

Nach einer bevorzugten Ausgestaltung kann zum einen vorgesehen sein, dass der Heißgas-Wärmetauscher einen Sandguss-Grundkörper aufweist, der in einer hülsenförmigen Ummantelung untergebracht ist und zu dem Flüssigkeitskanäle bildet und zum anderen, dass der Kondensations-Wärmetauscher als ein- oder mehrlagige Rohrschlange ausgebildet ist, die in einem mit Kondensatablauf und Abgasauslass versehenen Gehäuseteil untergebracht ist. Diese konstruktive Ausgestaltung stellt nur eine Ausführungsvariante dar. Die erfindungsgemäße Entkopplung der Abgasseite und der Flüssigkeitsseite im Heißgas-Wärmetauscher ist auch bei anderen Bauweisen erreichbar.

Dabei kann unabhängig von der Bauweise der Wärmetauschereinheit vorgesehen sein, dass der Heißgas-Wärmetauscher und der Kondensations-Wärmetauscher für die durchfließende Flüssigkeit in Reihe geschaltet sind oder dass der Heißgas-Wärmetauscher und der Kondensations-Wärmetauscher getrennten Flüssigkeitskreisen zugeordnet sind. Dies hängt allein von den zu erwärmenden Flüssigkeitskreisen ab.

Die die Wärmeübertragung zwischen Abgas und Flüssigkeit verschlechternde Beschichtung kann nach einer Ausführung aus Kunststoff bestehen, der eine schlechtere Wärmeübertragungseigenschaft als das Metall des Heißgas-Wärmetauschers aufweist.

Die Innenwände des Heißgas-Wärmetauschers, die mit Noppen, Stegen und dgl. zur Vergrößerung der Wärmeübertragungsfläche versehen sein können, sind bevorzugt aus Metall, während die Ummantelung aus Metall oder aus Kunststoff bestehen kann.

### Zeichnung

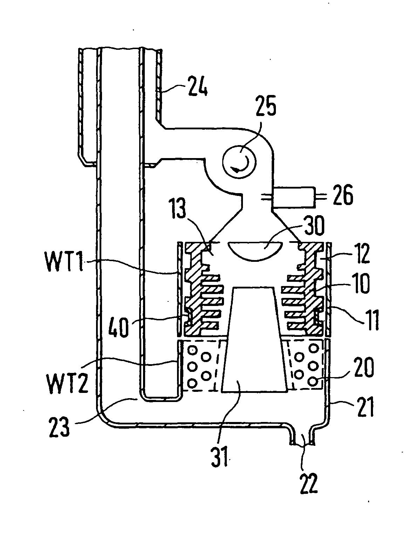

Die Erfindung wird anhand eines in der Zeichnung im Schnitt dargestellten Ausführungsbeispiels näher erläutert.

### Ausführungsbeispiel

Bei dem gezeigten Ausführungsbeispiel ist ein aus einem getrennten Heißgas-Wärmetauscher WT1 und einem getrennten Kondensations-Wärmetauscher WT2 bestehender Wärmetauscher bei einem Gasheizgerät eingesetzt. Dabei ist der Heißgas-Wärmetauscher WT1 aus einer hülsenförmigen Innenwand 10 und einer hülsenförmigen Ummantelung 11 zusammengesetzt. Dabei bildet die Außenwandung der Innenwand 10 spiralförmige Flüssigkeitskanäle 12, die von einem Einlass ausgehen und in einem Auslass enden. Auf der Innenwandung der Innenwand 10 sind Stege angeformt, die die Wärmeübertragungsfläche vergrößern. Ein Verdrängungskörper 31 leitet das Abgas an die Innenwand 10. Die Außenseite der Innenwand 10 des Heißgas-Wärmetauschers WT1 ist zumindest in dem dem nachfolgenden Kondensations-Wärmetauscher WT2 zugekehrten Bereich mit einer Kunststoff-Beschichtung 40 versehen, die einen definierten Wärmeleitwert aufweist, so dass selbst bei niedrigen Temperaturen der Flüssigkeit in den Flüssigkeitskanälen 12 die Innenwandung, d.h. die Wärmeleitfläche, des Heißgas-Wärmetauschers WT1 nicht unter den Taupunkt des Abgases fallen kann. Auf diese Weise wird eine unerwünschte Kondensatbildung in diesem Bereich des Heißgas-Wärmetauschers WT1 verhindert, obwohl das Abgas sich in diesem Bereich auch schon abgekühlt hat. Auf zusätzliche Korrosionsschutzmaßnahmen im Heißgas-Wärmetauscher WT1 kann daher verzichtet werden.

Hat das Abgas den Heißgas-Wärmetauscher WT1 passiert, dann kann es zwischen dem Verdrängungskörper 31 und der als ein- oder mehrlagige Rohrschlange 20 ausgebildeten Kondensations-Wärmetauscher WT2 passieren, der ja für die Kondensationsabscheidung korrosionsgeschützt ausgebildet ist. Die Rohrschlange 20 sitzt in einem eigenen Gehäuse 21, das mit einem KondensatAblauf 22 versehen ist und mit dem Abgasauslass 23 in einer Luft-Abgas-Führung endet, über die die Luftzuführung 24 bereits erwärmt wird. Die Luft wird über ein Gebläse 25 mit dem zugeführten Gas 26 einer Brennereinheit 30 zur Verbrennung zugeführt.

Dieser Aufbau des Gasheizgerätes stellt nur eine Ausführungsvariante dar, in der die erfindungsgemäße Wärmetauschereinheit eingesetzt ist. Andere Gasheizgeräte können in der gleichen vorteilhaften Weise mit der erfindungsgemäßen Wärmetauschereinheit ausgestattet werden.

## Patentansprüche

1. Wärmetauschereinheit aus einem der Brennkammer mit Brennereinheit zugekehrten Heißgas-Wärmetauscherabschnitt (WT1) und einem dem Abgasauslass zugekehrten von einer zu erwärmenden Flüssigkeit durchflossen Kondensations-Wärmetauscherabschnitt (WT2),
**dadurch gekennzeichnet,**
**dass** die dem Abgasstrom ausgesetzten Innenwände (10) des Heißgas-Wärmetauscherabschnittes (WT1) zumindest in einem dem Kondensations-Wärmetauscherabschnitt (WT2) zugekehrten Bereich eine Außenbeschichtung (40) mit definiertem Wärmeleitwert tragen, die die Innenwände des Heißgas-Wärmetauscherabschnittes (WT1) auf einer Temperatur über dem Taupunkt hält.

2. Wärmetauschereinheit nach Anspruch 1,
**dadurch gekennzeichnet,**
**dass** der Heißgas-Wärmetauscherabschnitt (WT1) und der Kondensations-Wärmetauscherabschnitt (WT2) als getrennte Wärmetauscher ausgebildet sind.

3. Wärmetauschereinheit nach Anspruch 2,
**dadurch gekennzeichnet,**
**dass** der Heißgas-Wärmetauscher einen Sandguss-Grundkörper (10) aufweist, der in einer hülsenförmigen Ummantelung (11) untergebracht ist und zudem Flüssigkeitskanäle (12) bildet.

4. Wärmetauschereinheit nach Anspruch 2,
**dadurch gekennzeichnet,**
**dass** der Kondensations-Wärmetauscher als ein- oder mehrlagige Rohrschlange (20) ausgebildet ist, die in einem mit Kondensatablauf (22) und Abgasauslass (23) versehenen Gehäuseteil (21) untergebracht ist.

5. Wärmetauschereinheit nach einem der Ansprüche 1 bis 4,
**dadurch gekennzeichnet,**
**dass** der Heißgas-Wärmetauscher und der Kondensations-Wärmetauscher für die durchfließende Flüssigkeit in Reihe geschaltet sind.

6. Wärmetauschereinheit nach einem der Ansprüche 1 bis 4,
**dadurch gekennzeichnet,**
**dass** der Heißgas-Wärmetauscher und der Kondensations-Wärmetauscher getrennten Flüssigkeitskreisen zugeordnet sind.

7. Wärmetauschereinheit nach Anspruch 1,
**dadurch gekennzeichnet,**
**dass** die Außenbeschichtung (40) der Innenwand aus Kunststoff besteht.

8. Wärmetauschereinheit nach einem der Ansprüche 3 bis 7,
**dadurch gekennzeichnet,**
**dass** die Innenwände (10) des Heißgas-Wärmetauschers aus Metall und die Ummantelung (11) aus Metall oder Kunststoff bestehen.

9. Wärmetauschereinheit nach einem der Ansprüche 1 bis 8,
**dadurch gekennzeichnet,**
**dass** die mit dem Abgas in Kontakt kommende Oberfläche des Kondensations-Wärmetauschers korrosionsgeschützt ist.

## Claims

1. A heat exchanger unit comprising a hot-gas heat exchanger section (WT1) facing the combustion chamber with burner unit and a condensation heat exchanger unit (WT2) through which a liquid to be heated flows, and which faces the exhaust gas outlet, **characterised in that**, at least in an area facing the condensation heat exchanger section (WT2), the inner walls (10) of the hot-gas heat exchanger section (WT1) which are exposed to the exhaust gas stream, have an outer coating (40) with a defined thermal conductance which keeps the inner walls of the hot gas heat exchanger section (WT1) at a temperature above the dew point.

2. The heat exchanger unit according to claim 1, **characterised in that** the hot gas heat exchanger section (WT1) and the condensation heat exchanger section (WT2) are formed as separate heat exchangers.

3. The heat exchanger unit according to claim 2, **characterised in that** the hot gas heat exchanger comprises a sand-cast base body (10) which is accommodated in a sleeve-shaped casing (11) and additionally forms liquid channels (12).

4. The heat exchanger unit according to claim 2, **characterised in that** the condensation heat exchanger is formed as a single- or multilayer pipe coil (20) which is accommodated in a housing part (21) provided with a condensate drain (22) and an exhaust gas outlet (23).

5. The heat exchanger unit according to any one of claims 1 to 4, **characterised in that** the hot gas heat exchanger and the condensation heat exchanger are connected in series for the through-flowing liquid.

6. The heat exchanger unit according to any one of claims 1 to 4, **characterised in that** the hot gas heat exchanger and the condensation heat exchanger are assigned to separate liquid circuits.

7. The heat exchanger unit according to claim 1, **characterised in that** the outer coating (40) of the inner wall consists of plastic.

8. The heat exchanger unit according to any one of claims 3 to 7, **characterised in that** the inner walls (10) of the hot gas heat exchanger consist of metal and the casing (11) consists of metal or plastic.

9. The heat exchanger unit according to any one of claims 1 to 8, **characterised in that** the surface of the condensation heat exchanger which comes in contact with the exhaust gas is protected from corrosion.

## Revendications

1. Unité échangeur de chaleur comprenant une partie d'échangeur de chaleur à gaz chaud (WT1) tournée vers la chambre de combustion avec unité de brûleur et une partie d'échangeur de chaleur à condensation (WT2) tournée vers la sortie des gaz brûlés et traversée par un liquide à réchauffer,
**caractérisée en ce que**
les parois intérieures (10), exposées au flux de gaz brûlés, de la partie d'échangeur de chaleur à gaz chaud (WT1) portent dans une zone tournée vers la partie d'échangeur de chaleur à condensation (WT2) un revêtement extérieur (40) avec une valeur de conductibilité thermique définie, qui maintient les parois intérieures de la partie d'échangeur de chaleur à gaz chaud (WT1) à une température au-dessus du point de rosée.

2. Unité échangeur de chaleur selon la revendication 1,
**caractérisée en ce que**
la partie d'échangeur de chaleur à gaz chaud (WT1) et la partie d'échangeur de chaleur à condensation (WT2) sont conçues comme des échangeurs de chaleur séparés.

3. Unité échangeur de chaleur selon la revendication 2,
**caractérisée en ce que**
la partie d'échangeur de chaleur à gaz chaud présente un corps de base en sablé coulé (10) qui est logé dans une enveloppe (11) en forme de douille et forme en plus des canaux de liquide (12).

4. Unité échangeur de chaleur selon la revendication 2,
**caractérisée en ce que**
l'échangeur de chaleur à condensation est conçu comme un serpentin (20) à une couche ou plusieurs couches qui est logé dans une partie de boîtier (21) dotée d'écoulement de condensat (22) et de sortie de gaz brûlés (23).

5. Unité échangeur de chaleur selon l'une quelconque des revendications 1 à 4,
**caractérisée en ce que**
l'échangeur de chaleur à gaz chaud et l'échangeur de chaleur à condensation sont montés en série pour le liquide circulant.

6. Unité échangeur de chaleur selon l'une quelconque des revendications 1 à 4,
**caractérisée en ce que**
l'échangeur de chaleur à gaz chaud et l'échangeur de chaleur à condensation sont attribués à des circuits de liquide séparés.

7. Unité échangeur de chaleur selon la revendication 1,
**caractérisée en ce que**
le revêtement extérieur (40) de la paroi intérieure est à base de matière synthétique.

8. Unité échangeur de chaleur selon l'une quelconque des revendications 3 à 7,
**caractérisée en ce que**
les parois intérieures (10) de l'échangeur de chaleur à gaz chaud sont en métal et l'enveloppe (11) est en métal ou matière synthétique.

9. Unité échangeur de chaleur selon l'une quelconque des revendications 1 à 8,
**caractérisée en ce que**
la surface venant en contact avec les gaz brûlés, de l'échangeur de chaleur à condensation est protégée contre la corrosion.
